(19) 

**Europäisches Patentamt**
**European Patent Office**
**Office européen des brevets**

(11) **EP 4 760 802 A1**

(12) **EUROPEAN PATENT APPLICATION**

(43) Date of publication:
**17.06.2026 Bulletin 2026/25**

(21) Application number: **25208738.2**

(22) Date of filing: **15.10.2025**

(51) International Patent Classification (IPC):
**H01M 4/134** (2010.01)   **H01M 4/139** (2010.01)
**H01M 4/38** (2006.01)   **H01M 10/052** (2010.01)
**H01M 10/0562** (2010.01)

(52) Cooperative Patent Classification (CPC):
**H01M 10/0562; H01M 4/134; H01M 4/139;**
**H01M 4/386; H01M 10/052; H01M 2300/0068**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.12.2024 JP 2024218782**

(71) Applicant: **TOYOTA JIDOSHA KABUSHIKI KAISHA**
**Toyota-shi, Aichi-ken 471-8571 (JP)**

(72) Inventors:
• **Otaki, Mitsutoshi**
  **Toyota-shi, Aichi-ken 471-8571 (JP)**
• **Visbalmendoza, Heidyhodex**
  **Toyota-shi, Aichi-ken 471-8571 (JP)**

(74) Representative: **Winter, Brandl - Partnerschaft mbB**
**Alois-Steinecker-Straße 22**
**85354 Freising (DE)**

(54) **ELECTRODE ACTIVE MATERIAL LAYER AND BATTERY**

(57)    The present disclosure provides an electrode active material layer that can improve battery capacity retention, as well as a battery comprising the electrode active material layer, whereby the capacity retention is improved. The electrode active material layer of the disclosure comprises an electrode active material and a sulfide solid electrolyte. In the electrode active material layer of the present disclosure, the peak intensity in the spectrum obtained by XPS measurement satisfies the following relational expression (1):

$$0.40 \leq I(163.0)/I(161.5) \leq 0.60 \quad (1)$$

wherein:
I (163.0) is the maximum peak intensity at 163.0 $\pm$ 1.0 eV,
I (161.5) is the maximum peak intensity at 161.5 $\pm$ 1.0 eV. The battery of the disclosure 100 comprises an electrode active material layer.

FIG. 1

100

EP 4 760 802 A1

**Description**

FIELD

The present disclosure relates to an electrode active material layer and a battery.

BACKGROUND

Solid-state batteries which comprise a sulfide solid electrolyte in an electrode mixture (electrode active material layer), i.e. sulfide solid-state batteries, are known, as disclosed in PTL 1.

[CITATION LIST]

[PATENT LITERATURE]

[PTL 1] Japanese Unexamined Patent Publication No. 2023-167083

SUMMARY

[TECHNICAL PROBLEM]

Batteries, particularly sulfide solid-state batteries, still have room for improvement from the viewpoint of capacity retention.
It is an object of the present disclosure to provide an electrode active material layer that can improve battery capacity retention, as well as a battery comprising the electrode active material layer, whereby the capacity retention is improved.

[SOLUTION TO PROBLEM]

The present inventors have found that the aforementioned object can be achieved by the following means.

<Aspect 1>

An electrode active material layer, comprising

an electrode active material and a sulfide solid electrolyte,
wherein the peak intensity in the spectrum obtained by XPS measurement satisfies the following relational expression (1):

$$0.40 \leq I\,(163.0)/I\,(161.5) \leq 0.60 \quad (1)$$

wherein:

I (163.0) is the maximum peak intensity at 163.0 $\pm$1.0 eV,
I (161.5) is the maximum peak intensity at 161.5 $\pm$1.0 eV.

<Aspect 2>

The electrode active material layer according to aspect 1, wherein the electrode active material is a silicon-based electrode active material.

<Aspect 3>

The electrode active material layer according to aspect 2, wherein:

the peak intensity in the spectrum obtained by FT-IR measurement satisfies the following relational expression (2):

$$0 < I(3200)/I(3400) \leq 0.7 \qquad (2)$$

wherein:

I (3200) is peak intensity at $3200 \pm 50$ cm$^{-1}$,
I (3400) is peak intensity at $3400 \pm 50$ cm$^{-1}$.

<Aspect 4>

The electrode active material layer according to any one of aspects 1 to 3, wherein the sulfide solid electrolyte is a $Li_2S$-$P_2S_5$-based glass ceramic.

<Aspect 5>

A battery having an electrode active material layer according to any one of aspects 1 to 4.

<Aspect 6>

The battery according to aspect 5, wherein the electrode active material layer is a negative electrode active material layer.

<Aspect 7>

The battery according to aspect 5 or 6, which is a solid-state battery.

[ADVANTAGEOUS EFFECTS OF INVENTION]

According to the present disclosure it is possible to provide an electrode active material layer that can improve battery capacity retention. According to the disclosure it is also possible to provide a battery with improved capacity retention.

BRIEF DESCRIPTION OF DRAWINGS

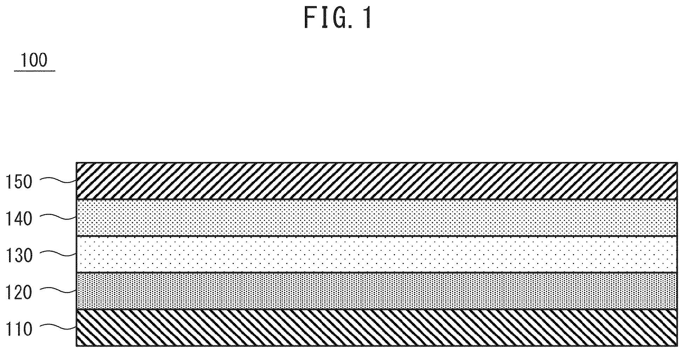

Fig. 1 is a simplified cross-sectional view showing an example of a battery of the disclosure.

DESCRIPTION OF EMBODIMENTS

An embodiment of the disclosure will now be described in detail. The disclosure is not limited to the embodiment described below, however, and various modifications may be implemented which do not depart from the gist thereof.

<<Electrode active material layer>>

The electrode active material layer of the disclosure comprises an electrode active material and a sulfide solid electrolyte. In the electrode active material layer of the present disclosure, the peak intensity in the spectrum obtained by XPS measurement satisfies the following relational expression (1):

$$0.40 \leq I(163.0)/I(161.5) \leq 0.60 \qquad (1)$$

wherein:

I (163.0) is the maximum peak intensity at $163.0 \pm 1.0$ eV,
I (161.5) is the maximum peak intensity at $161.5 \pm 1.0$ eV.

The present inventors considered that one of the reasons for reduction in battery capacity retention is reductive decomposition of the solid electrolyte by lithium.
However, the present inventors found that if the two peak intensities in the spectrum obtained by XPS measurement of the electrode active material layer satisfy the specified relational expression, it is possible to improve the capacity retention of the battery comprising the electrode active material layer.

In relational expression (1), I (163.0) is the peak intensity for S-O, and I (161.5) is the peak intensity for S-S. Thus, I (163.0)/1 (161.5), as the ratio of S-O with respect to S-S in the sulfide solid electrolyte, indicates the degree of oxidation of the sulfide solid electrolyte.

Without being constrained by any particular theory, the following is believed to be the reason why the electrode active material layer of the disclosure is able to improve the capacity retention of a battery comprising it. Specifically, if the two peak intensities in the spectrum obtained by XPS measurement satisfy the specified relational expression, it will be possible to produce a state in which the solid electrolyte is suitably oxidized, or in other words, a state in which the surface of the solid electrolyte is oxidized while inhibiting excessive oxidation which can lead to deterioration of the solid electrolyte. It is believed that oxidation of the surface of the solid electrolyte inhibits reductive decomposition of the solid electrolyte by lithium, thereby improving the capacity retention of the battery.

The elements composing the electrode active material layer of the disclosure will now be described. For the purpose of the disclosure, the electrode active material layer may be a negative electrode active material layer or a positive electrode active material layer, and especially a negative electrode active material layer.

<Electrode active material>

The electrode active material layer of the disclosure comprises an electrode active material.

For the purpose of the disclosure, the electrode active material may be a negative electrode active material or a positive electrode active material, and especially a negative electrode active material.

The electrode active material is not particularly restricted and may be a silicon-based electrode active material, for example. The silicon-based electrode active material is also not particularly restricted and may be silicon, silicon oxide, silicon carbide or silicon nitride, or a solid solution of the same, for example. The silicon-based electrode active material may also contain elements other than silicon, such as Fe, Co, Sb, Bi, Pb, Ni, Cu, Zn, Ge, In, Sn and Ti, for example. The silicon-based electrode active material may be a negative electrode active material.

The electrode active material is most preferably silicon. The silicon is not particularly restricted and may be porous silicon, for example.

The negative electrode active material is not limited to the silicon-based electrode active material described above so long as it is a substance having electronegative potential compared to the positive electrode active material. The negative electrode active material may be of a single type or a combination of two or more types.

The negative electrode active material may be in particulate form, for example.

The positive electrode active material is not particularly restricted so long as it is a substance having an electropositive potential compared to the negative electrode active material. Without being particularly restrictive, when the electrode active material layer of the disclosure is an electrode active material layer for a lithium ion secondary battery, the positive electrode active material may be, for example, lithium cobaltate ($LiCoO_2$), lithium nickelate ($LiNiO_2$), lithium manganate ($LiMn_2O_4$), $LiCo_{1/3}Ni_{1/3}Mn_{1/3}O_2$, a heterogenous element-substituted Li-Mn spinel represented by $Li_{1+x}Mn_{2-x-y}MyO_4$ (where M is one or more metal elements selected from among Al, Mg, Co, Fe, Ni and Zn), lithium titanate ($Li_xTiO_y$), a lithium metal phosphate ($LiMPO_4$, where M is one or more metals selected from among Fe, Mn, Co and Ni), or a combination of the foregoing.

The positive electrode active material may also have a covering layer. The covering layer is not particularly restricted, and when the electrode active material layer of the disclosure is an electrode active material layer for a lithium ion secondary battery, it is a layer comprising a substance with lithium ion conductivity, low reactivity with the positive electrode active material or solid electrolyte, and capable of maintaining a covering layer form that is not fluid even when contacted with the active material or solid electrolyte. The material composing the covering layer is not particularly restricted and may be $LiNbO_3$, $Li_4Ti_5O_{12}$ or $Li_3PO_4$, for example.

The positive electrode active material may be in particulate form, for example.

<Sulfide solid electrolyte>

The electrode active material layer of the disclosure comprises a sulfide solid electrolyte.

The sulfide solid electrolyte is not particularly restricted and may be, for example, a sulfide amorphous solid electrolyte, a sulfide crystalline solid electrolyte or an argyrodite-type solid electrolyte, and especially a sulfide amorphous solid electrolyte.

The sulfide amorphous solid electrolyte is not particularly restricted, and when the electrode active material layer of the disclosure is an electrode active material layer for a lithium ion secondary battery, it may be, for example, $Li_2S$-$P_2S_5$-based (such as $Li_7P_3S_{11}$, $Li_3PS_4$ or $Li_8P_2S_9$), $Li_2S$-$SiS_2$, $LiI$-$Li_2S$-$SiS_2$, $LiI$-$Li_2S$-$P_2S_5$, $LiI$-$LiBr$-$Li_2S$-$P_2S_5$, $LiI$-$Li_2S$-$P_2O_5$ or $LiI$-$Li_3PO4$-$P_2S_5$, or a combination of the foregoing.

A sulfide solid electrolyte may be glass or crystallized glass (glass ceramic).

In particular, the sulfide solid electrolyte may be a $Li_2S-P_2S_5$-based glass ceramic.

<Relational expression>

In the electrode active material layer of the present disclosure, the peak intensity in the spectrum obtained by XPS measurement satisfies the following relational expression (1):

$$0.40 \leq I\,(163.0)/I\,(161.5) \leq 0.60 \quad (1)$$

where

I (163.0): maximum peak intensity at 163.0 ±1.0 eV,
I (161.5): maximum peak intensity at 161.5 ±1.0 eV.

As mentioned above, I (163.0)/I (161.5) represents the degree of oxidation of the sulfide solid electrolyte, and satisfying relational expression (1) above can improve the capacity retention of the battery.

I(163.0)/I (161.5) may be 0.41 or higher, 0.42 or higher, 0.43 or higher, 0.44 or higher or 0.45 or higher, and 0.55 or lower, 0.52 or lower, 0.50 or lower, 0.49 or lower, 0.48 or lower or 0.47 or lower. If I (163.0)/1 (161.5) is within this range it will be possible to effectively improve the capacity retention of the battery.

A Versaprobe II by Ulvac-Phi, Inc. may be used for XPS (X-ray photoelectron spectroscopy) measurement. In XPS measurement, the maximum intensity of C1s in the obtained spectrum may be calibrated to 284.8 eV. The average value for the peak intensity for 158 eV to 157 eV may be used as the background. The ratio of the maximum peak intensity at 162 eV to 164 eV with respect to the maximum peak intensity at 160.5 eV to 162.5 eV may also be calculated. The maximum peak intensity at 162 eV to 164 eV may be the peak intensity value at 163 eV, for example. The maximum peak intensity at 160.5 eV to 162.5 eV may be the peak intensity value at 161.5 eV, for example.

In the electrode active material layer of the disclosure, the peak intensity of the spectrum obtained by FT-IR measurement may satisfy the following relational expression (2):

$$0 < I\,(3200)/I\,(3400) \leq 0.7 \quad (2)$$

wherein:

I (3200) is peak intensity at 3200 ±50 cm$^{-1}$ in FT-IR measurement,
I (3400) is peak intensity at 3400 ±50 cm$^{-1}$ in FT-IR measurement.

In relational expression (2), I (3200) is the reference peak and I (3400) is the Si-OH peak. Si-OH is produced from oxidized silicon. Therefore, I (3200)/I (3400) represents the degree of oxidation of the silicon-based electrode active material.

If relational expression (2) is satisfied, it will be possible to effectively improve the capacity retention of the battery. Without being limited to any particular theory, it is believed that suitable oxidation of the silicon-based electrode active material inhibits reaction of the sulfide solid electrolyte with silicon as the catalyst, thereby allowing the capacity retention to be improved.

I (3200)/1 (3400) may be 0.10 or higher, 0.15 or higher, 0.20 or higher or 0.25 or higher, and 0.65 or lower or 0.60 or lower.

<FT-IR>

FT-IR (Fourier transform infrared spectroscopy) measurement may be carried out by Attenuated Total Reflection (ATR), using a Nicolet™ iS™ 50 FT-IR by Thermo Fisher. The obtained sample may be subjected to background treatment.

In the electrode active material layer of the disclosure, the peak intensity of the spectrum obtained by XPS measurement and the peak intensity of the spectrum obtained by FT-IR measurement may satisfy the following relational expression (3):

$$0.70 \leq (I\,(163.0)/I\,(161.5))/(I\,(3200)/I\,(3400)) \leq 2.0 \quad (3).$$

If relational expression (3) is satisfied it will be possible to effectively improve the capacity retention of the battery.

The value of (I (163.0)/1 (161.5))/(I (3200)/I (3400)) may be 0.75 or greater, 0.80 or greater or 0.90 or greater, and 1.90 or lower, 1.85 or lower, 1.80 or lower or 1.75 or lower.

The electrode active material layer may also optionally comprise a conductive aid and a binder.

(Conductive aid)

The conductive aid may be, but is not particularly limited to, VGCF (Vapor-Grown Carbon Fiber), acetylene black (AB), Ketjen black (KB), carbon nanotubes (CNT) or carbon nanofibers (CNF), or a combination thereof.

(Binder)

The binder may be, but is not particularly limited to, polyvinylidene fluoride (PVDF), butadiene rubber (BR) or styrene-butadiene rubber (SBR), or a combination thereof.

<Method for producing electrode active material layer>

The electrode active material layer of the disclosure can be produced by a method comprising the following steps (a) to (d):

(a) preparation of an electrode mixture slurry comprising an electrode active material, a sulfide solid electrolyte and a dispersing medium,
(b) coating of the electrode mixture slurry onto a substrate,
(c) drying removal of the dispersing medium to form an electrode active material layer, and
(d) densification of the electrode active material layer.

<Step of preparing electrode mixture slurry>

The electrode active material layer of the disclosure can be produced by a method that includes (a) preparing an electrode mixture slurry comprising an electrode active material, a sulfide solid electrolyte and a dispersing medium.

For the purpose of the disclosure, "mixture" means a composition that can form an active material layer either by itself or by further comprising other components. Moreover, the term "mixture slurry" means a slurry that comprises a dispersing medium in addition to the "mixture", allowing it to form an active material layer by being coated and dried.

The slurry can be prepared by a common method such as mixing of the constituent components.

<Electrode mixture slurry coating step>

The electrode active material layer of the disclosure can be produced by a method that includes (b) coating the electrode mixture slurry onto a substrate.

The method of coating the electrode mixture slurry onto the substrate is not particularly restricted, and it may be a blade method using an applicator, for example.

The substrate is not particularly restricted and may be an electrode collector layer, for example. That is, when the electrode mixture is a negative electrode mixture, for example, the substrate may be a negative electrode collector layer, and when the electrode mixture is a positive electrode mixture, the substrate may be a positive electrode collector layer. The substrate may also be a release sheet.

<Electrode active material layer forming step>

The electrode active material layer of the disclosure can be produced by a method that includes (c) drying removal of the dispersing medium to form an electrode active material layer.

The method for drying removal of the dispersing medium is not particularly restricted, and for example, it may be a method of allowing it to stand for a prescribed time period on a hot plate at a prescribed temperature. The drying temperature and drying time are not particularly restricted, and may be set as appropriate based on the amount of dispersing medium used and the boiling point.

<Densification step>

The electrode active material layer of the disclosure can be produced by a method that includes (d) densification of the electrode active material layer.

The method of densifying the electrode active material layer is not particularly restricted, and for example, it may be a method of pressing the electrode active material layer. The pressing pressure and the pressing temperature are also not particularly restricted, and may be appropriately set in consideration of the desired electrode density.

<First environment and second environment>

One, two or three steps from among steps (a) to (d) may be carried out in a first environment with an oxygen concentration of 1 vol% or higher, and another step from among steps (a) to (d) may be carried out in a second environment with an oxygen concentration of lower than 1 vol%. Such a method will help to suitably adjust the oxidation state on the solid electrolyte surface, thus facilitating production of the electrode active material of the disclosure.

The oxygen concentration of the first environment may be 3 vol% or higher, 5 vol% or higher, 10 vol% or higher, 15 vol% or higher or 20 vol% or higher, and 40 vol% or lower, 30 vol% or lower or 25 vol% or lower. The oxygen concentration of the first environment may be about the same as the concentration in air, i.e. about 21 vol%.

The oxygen concentration in the second environment may be $1 \times 10^{-1}$ vol% (1000 ppm by vol) or lower, $1 \times 10^{-2}$ vol% (100 ppm by vol) or lower, $1 \times 10^{-3}$ vol% (10 ppm by vol) or lower or $5 \times 10^{-4}$ vol% (5 ppm by vol) or lower.

The dew point of the first environment may be -65°C or higher, and/or the dew point of the second environment may be lower than -65°C.

The dew point of the first environment may be -60°C or higher, -55°C or higher or -50°C or higher, and -20°C or lower, no -25°C or lower, -30°C or lower, -35°C or lower, -40°C or lower, -45°C or lower or -50°C or lower, or it may be -50°C.

The dew point of the second environment may be -100°C or higher, -95°C or higher, -90°C or higher, -85°C or higher or -80°C or higher, and -70°C or lower, -75°C or lower or -80°C or lower, or it may be -80°C.

The first environment may be a dry air atmosphere, and the second environment may be an inert gas atmosphere.

For the purpose of the disclosure, "dry air" means air that has low moisture and therefore has a lower dew point than atmospheric air. The dry air atmosphere may be an atmosphere in a dry room filled with dry air.

The inert gas is not particularly restricted and may be nitrogen gas or argon gas, for example. The inert gas atmosphere may be an atmosphere in a glove box filled with an inert gas.

The number of steps carried out in the first environment may be one, two or three. In particular, one of steps (a) to (d) may be carried out in the first environment.

Step (a) and/or step (b) may be carried out in the first environment, and especially step (b) may be carried out in the first environment.

The total time for carrying out the procedure in the first environment is not particularly restricted, and may be 1 minute or longer, 10 minutes or longer, 30 minutes or longer or 1 hour or longer, and 10 hours or less, 5 hours or less, 3 hours or less or 1 hour or less, for example.

The phrase "total time for carrying out the procedure in the first environment" includes not only the time for the step of carrying out the first environment in each of steps (a) to (d), but also the time before and after each step held in the first environment. Therefore, when the electrode mixture slurry is allowed to stand in the first environment after preparation of the electrode mixture slurry and before coating of the electrode mixture slurry, that standing time is included within the "total time for carrying out the procedure in the first environment".

<<Battery>>

As shown in Fig. 1, the battery of the disclosure 100 comprises an electrode active material layer. The battery of the disclosure may have a negative electrode collector layer 110, a negative electrode active material layer 120, an electrolyte layer 130, a positive electrode active material layer 140 and a positive electrode collector layer 150, in that order.

The battery of the disclosure may be a liquid battery comprising an electrolyte solution as the electrolyte layer, or it may be a solid-state battery having a solid electrolyte layer as the electrolyte layer. The battery of the disclosure is most especially a solid-state battery. The term "solid-state battery" as used herein refers to a battery using at least a solid electrolyte as the electrolyte, and the solid-state battery may also employ a combination of a solid electrolyte and a liquid electrolyte as the electrolyte. Alternatively, the solid-state battery may be an all-solid-state battery, i.e. a battery employing only a solid electrolyte as the electrolyte.

The battery may be a primary battery or a secondary battery, and especially a lithium ion secondary battery.

The elements composing the battery of the disclosure will now be described. This will now be explained as an example where the battery of the disclosure is an all-solid-state lithium ion secondary battery, i.e. when the electrolyte is a solid electrolyte and the electrolyte layer is therefore a solid electrolyte layer, and the electrode active material layer of the disclosure is a negative electrode active material layer.

<Negative electrode collector layer>

The material composing the negative electrode collector layer is not particularly restricted and may be copper or a copper alloy, for example, or it may be nickel, chromium or carbon that has been plated or vapor deposited on copper.

The form of the negative electrode collector layer is not particularly restricted and may be, for example, a foil, sheet or mesh, and especially a foil.

<Negative electrode active material layer>

For the exemplary modes described above, the negative electrode active material layer was an electrode active material layer of the disclosure. The electrode active material layer of the disclosure is as described above in regard to the electrode active material layer of the disclosure.

When the negative electrode active material layer comprises a solid electrolyte, the mass ratio of the electrode active material and the solid electrolyte in the negative electrode active material layer (electrode active material mass:solid electrolyte mass) may be 85:15 to 30:70 or 80:20 to 40:60.

The thickness of the negative electrode active material layer may be 0.1 $\mu$m to 1000 $\mu$m, 1 $\mu$m to 100 $\mu$m or 30 $\mu$m to 100 $\mu$m, for example.

<Solid electrolyte layer>

The solid electrolyte layer comprises at least a solid electrolyte, and may also optionally include a binder or the like. The solid electrolyte and binder are as described above in regarding to the electrode active material layer of the disclosure.

The thickness of the solid electrolyte layer may be 0.1 to 300 $\mu$m or 0.1 to 100 $\mu$m, for example.

<Positive electrode active material layer>

The positive electrode active material layer comprises a positive electrode active material, and may also optionally comprise an electrolyte, a conductive aid and a binder. The components are as described above in regard to the electrode active material layer of the disclosure.

When the positive electrode active material layer comprises a solid electrolyte, the mass ratio of the positive electrode active material and the solid electrolyte in the positive electrode active material layer (positive electrode active material mass:solid electrolyte mass) may be 85:15 to 30:70 or 80:20 to 50:50.

The thickness of the positive electrode active material layer may be 0.1 $\mu$m to 1000 $\mu$m, 1 $\mu$m to 100 $\mu$m or 30 $\mu$m to 100 $\mu$m, for example.

<Positive electrode collector layer>

The material composing the positive electrode collector layer is not particularly restricted and may be, for example, SUS, nickel, chromium, gold, platinum, aluminum, iron, titanium or zinc, optionally with nickel, chromium or carbon that has been plated or vapor deposited on these metals.

The form of the positive electrode collector layer is not particularly restricted and may be, for example, a foil, sheet or mesh, and especially a foil.

<Remaining construction>

The battery may have any of the constructions described above housed inside an exterior body. The exterior body used may be any publicly known type used as an exterior body for batteries. A plurality of batteries may also be optionally electrically connected and optionally stacked to form a battery assembly. In this case the assembled batteries may be housed inside a publicly known battery case. The battery may have an obvious type of construction, with the necessary terminals, for example. Examples of battery forms include coins, laminated types (pouches), cylindrical types and rectilinear types.

The battery may be constrained by a constraining member such as an end plate, from both sides in the stacking direction of each layer. The constraining method may be, but is not limited to, a method utilizing the constraining torque of a bolt.

[Examples]

<<Example 1>>

<Synthesis of electrode active material>

Lithium metal (Li) and silicon (Si) powder were weighed out to a molar ratio of 4:1, and were mixed and reacted in a mortar at room temperature for 0.5 hours under an argon (Ar) atmosphere. Lithium silicon ($Li_4Si$) was thus obtained. The obtained $Li_4Si$ was reacted with ethanol under an Ar atmosphere. The obtained reaction product was filtered, and the filtered solid content was dried at 120°C for 3 hours or longer to obtain powdered porous Si as a silicon electrode active material.

<Formation of negative electrode active material layer>

Unless otherwise specified, formation of the negative electrode active material layer was carried out in an environment with an oxygen concentration of 5 ppm or lower and a dew point of -80°C or lower. For convenience the densification step is included within the column for fabrication of the battery, but it constitutes part of forming the negative electrode active material layer.

<Step of preparing negative electrode mixture slurry>

After adding butyl butyrate, a 5 wt% butyl butyrate solution of a butadiene rubber (BR)-based binder, vapor-grown carbon fiber (VGCF) as a conductive aid, the silicon electrode active material synthesized as the negative electrode active material and a $Li_2S$-$P_2S_5$-based glass ceramic as a sulfide solid electrolyte into a polypropylene container, the components were stirred for 30 seconds with an ultrasonic disperser (UH-50 by SMT Corp.). The container was then shaken for 30 minutes with a shaker (TTM-1 by Sibata Scientific Technology, Ltd.) to obtain a negative electrode mixture slurry. It was then allowed to stand for 1 hour in an environment with an oxygen concentration of approximately 21 vol% and a dew point of -50°C.

<Negative electrode mixture slurry coating step>

The obtained negative electrode mixture slurry was coated onto a copper (Cu) foil (product of UACJ) as a negative electrode collector layer by a blade method, using an applicator.

(Drying step)

The Cu foil coated with the negative electrode mixture slurry was dried for 30 minutes on a hot plate heated to 100°C, to form an electrode active material layer of the disclosure as a negative electrode active material layer on the negative electrode collector layer.

<Formation of solid electrolyte layer>

After adding heptane, a 5 wt% heptane solution of a butadiene rubber (BR)-based binder, and an $Li_2S$-$P_2S_5$-based glass ceramic as a sulfide solid electrolyte into a polypropylene container, the components were stirred for 30 seconds with an ultrasonic disperser (UH-50 by SMT Corp.). The container was then shaken for 30 minutes with a shaker (TTM-1 by Sibata Scientific Technology, Ltd.) to obtain a solid electrolyte slurry. The obtained solid electrolyte slurry was coated onto an aluminum (Al) foil as a release sheet by the blade method, using an applicator. The Al foil coated with the solid electrolyte slurry was dried for 30 minutes on a hot plate heated to 100°C to form a solid electrolyte layer. Three solid electrolyte layers were fabricated in this manner.

<Formation of positive electrode active material layer>

After adding butyl butyrate, a 5 wt% butyl butyrate solution of a polyvinylidene fluoride (PVDF)-based binder, $LiNi_{1/3}Co_{1/3}Mn_{1/3}O_2$ with a mean particle diameter of 6 $\mu$m as a positive electrode active material, a $Li_2S$-$P_2S_5$-based glass ceramic as a sulfide solid electrolyte and VGCF as a conductive aid into a polypropylene container, the components were stirred for 30 seconds with an ultrasonic disperser (UH-50 by SMT Corp.). The container was then shaken for 3 minutes with a shaker (TTM-1 by Sibata Scientific Technology, Ltd.), stirred for 30 seconds with an ultrasonic disperser and further shaken for 3 minutes with a shaker, to obtain a positive electrode mixture slurry. The obtained positive electrode mixture slurry was coated onto an Al foil (product of Showa Denko K.K.) as a positive electrode collector layer by a blade method, using an applicator. The Al foil coated with the positive electrode mixture slurry was dried for 30 minutes on a hot plate heated to 100°C to form a positive electrode active material layer on the positive electrode collector layer.

<Fabrication of battery>

The negative electrode collector layer, negative electrode active material layer and first solid electrolyte layer were stacked in that order. The side of the solid electrolyte layer on which the Al foil was not disposed was layered to face the negative electrode active material layer.

(Densification step)

The stack was set in a roll press and pressed at a pressing pressure of 60 kN/cm and a pressing temperature of 25°C to obtain a densified negative electrode stack.
The positive electrode collector layer, positive electrode active material layer and second solid electrolyte layer were stacked in that order. The side of the solid electrolyte layer on which the Al foil was not disposed was layered to face the positive electrode active material layer. The stack was set in a roll press and pressed at a pressing pressure of 100 kN/cm and a pressing temperature of 165°C to obtain a positive electrode stack.
The area of the negative electrode stack was larger than the area of the positive electrode stack.
The Al foil release sheet was then released from the first solid electrolyte layer surface. A third solid electrolyte layer was laminated on the first solid electrolyte layer of the exposed negative electrode stack. The stack was set in a flat uniaxial press machine and temporarily pressed at 100 MPa, 25°C for 10 seconds. The Al foil was released from the third solid electrolyte layer to obtain a negative electrode stack further comprising a layered third solid electrolyte layer.
The Al foil release sheet was released from the second solid electrolyte layer surface. A second solid electrolyte layer was layered onto the third solid electrolyte layer. The stack was set in a flat uniaxial press machine and pressed for 1 minute at a pressing pressure of 200 MPa and a pressing temperature of 120°C. An all-solid-state battery was thus obtained.

<Evaluation>

(XPS measurement)

A Versaprobe II by Ulvac-Phi, Inc. was used for XPS measurement. The maximum intensity of C1s in the obtained spectrum was calibrated to 284.8 eV. The average value for the peak intensity for 158 eV to 157 eV was used as the background. The ratio of the maximum peak intensity at 162 eV to 164 eV with respect to the maximum peak intensity at 160.5 eV to 162.5 eV (I (163.0)/I (161.5)) was also calculated. The maximum peak intensity at 162 eV to 164 eV was recorded as the peak intensity value at 163 eV. The maximum peak intensity at 160.5 eV to 162.5 eV was recorded as the peak intensity value at 161.5 eV.

(FT-IR measurement)

FT-IR measurement was carried out by the Attenuated Total Reflection (ATR) method using a Nicolet™ iS™ 50 FT-IR by Thermo Fisher. The obtained sample was subjected to background treatment. The ratio of the peak intensity at $3200 \pm 50$ cm$^{-1}$ with respect to the peak intensity at $3400 \pm 50$ cm$^{-1}$ (I (3200)/I (3400)) was calculated.

(Calculation of capacity retention)

A restraint jig was used to constrain the fabricated all-solid-state batteries at a predetermined constraining pressure, and constant-current/constant-voltage charge was carried out at a 10 hour rate (1/10 C) to 4.55 V, with discharge to 3.0 V at a 1 hour rate (1 C). In addition, constant-current/low-voltage charge was carried out to 4.35 V at a 3 hour rate (1/3 C), and constant-current/constant-voltage discharge was carried out to 3.00 V at a 3 hour rate (1/3 C), to determine the initial capacity. The same charge-discharge test was subsequently repeated 5 times, and the capacity retention from the initial capacity was calculated.

<<Example 2>>

An all-solid-state battery was obtained and evaluated in the same manner as Example 1, except that the step of standing in an environment with an oxygen concentration of approximately 21 vol% and a dew point of -50°C was changed to the electrode mixture slurry coating step, i.e. coating of the electrode mixture slurry in that environment.

<<Example 3>>

An all-solid-state battery was obtained and evaluated in the same manner as Example 1, except that the step of standing in an environment with an oxygen concentration of approximately 21 vol% and a dew point of -50°C was changed to the electrode mixture slurry coating step and the drying step, i.e. coating of the electrode mixture slurry in that environment and drying removal of the dispersing medium in the electrode mixture slurry.

<<Comparative Example 1>>

An all-solid-state battery was obtained and evaluated in the same manner as Example 1, except that none of the steps were carried out in an oxygen concentration of approximately 21 vol% or a dew point of -50°C, and coating of the electrode mixture slurry was carried out in an environment with an oxygen concentration of 500 ppm and a dew point of -80°C.

<<Comparative Example 2>>

An all-solid-state battery was obtained and evaluated in the same manner as Example 1, except that the electrode mixture slurry preparation step, electrode mixture slurry coating step, drying step and densification step were all carried out in an environment with an oxygen concentration of approximately 21 vol% and a dew point of -50°C.

Table 1 shows the evaluation results for each Example, specifically I (163.0)/I (161.5), I (3200)/1 (3400), (I (163.0)/1 (161.5))/(I (3200)/I (3400)) and the capacity retention. The capacity retention is represented as a relative value with respect to 100 as the value for Comparative Example 2.

[Table 1]

|  | I(163.0)/I(161.5) [-] | I(3200)/I(3400) [-] | (I(163.0)/I(161.5)) /(1(3200)/1(3400)) [-] | Capacity retention [-] |
|---|---|---|---|---|
| Comp. Ex. 1 | 0.43 | 0.77 | 0.56 | 103 |
| Example 1 | 0.45 | 0.38 | 0.98 | 112 |
| Example 2 | 0.47 | 0.27 | 1.75 | 120 |
| Example 3 | 0.52 | 0.57 | 0.76 | 104 |
| Comp. Ex. 2 | 0.64 | 0.98 | 0.65 | 100 |

As shown in Table 1, the capacity retention was high when the battery had an electrode active material layer in which I (163.0)/1 (161.5) was within the predetermined range, i.e. in which the peak intensity of the spectrum obtained by XPS measurement satisfied relational expression (1).

REFERENCE SIGNS LIST

100    Battery
110    Negative electrode collector layer
120    Negative electrode active material layer
130    Electrolyte layer
140    Positive electrode active material layer
150    Positive electrode collector layer

**Claims**

1.   An electrode active material layer, comprising

an electrode active material and a sulfide solid electrolyte,
wherein the peak intensity in the spectrum obtained by XPS measurement satisfies the following relational expression (1):

$$0.40 \leq I\,(163.0)/I\,(161.5) \leq 0.60 \quad (1)$$

wherein:

I (163.0) is the maximum peak intensity at 163.0 $\pm$1.0 eV,
I (161.5) is the maximum peak intensity at 161.5 $\pm$1.0 eV.

2.  The electrode active material layer according to claim 1, wherein the electrode active material is a silicon-based electrode active material.

3.  The electrode active material layer according to claim 2, wherein:

    the peak intensity in the spectrum obtained by FT-IR measurement satisfies the following relational expression (2):

$$0 < I\,(3200)/I\,(3400) \leq 0.7 \quad (2)$$

wherein:

I (3200) is peak intensity at 3200 $\pm$50 cm$^{-1}$,
I (3400) is peak intensity at 3400 $\pm$50 cm$^{-1}$.

4.  The electrode active material layer according to claim 1, wherein the sulfide solid electrolyte is a $Li_2S$-$P_2S_5$-based glass ceramic.

5.  A battery having an electrode active material layer according to any one of claims 1 to 4.

6.  The battery according to claim 5, wherein the electrode active material layer is a negative electrode active material layer.

7.  The battery according to claim 5, which is a solid-state battery.

FIG. 1

100

**EUROPEAN SEARCH REPORT**

Application Number

EP 25 20 8738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2022 006660 A (TOYOTA MOTOR CORP) 13 January 2022 (2022-01-13) * claim 1 * | 1-7 | INV. H01M4/134 H01M4/139 H01M4/38 |
| A | EP 3 605 664 B1 (TOYOTA MOTOR CO LTD [JP]) 10 May 2023 (2023-05-10) * claim 1 * | 1-7 | H01M10/052 H01M10/0562 |
| A | WO 2022/239304 A1 (AIST [JP]) 17 November 2022 (2022-11-17) * claims 14, 16 * | 1-7 | |

-----

**TECHNICAL FIELDS SEARCHED (IPC)**

H01M

The present search report has been drawn up for all claims

| Place of search | Date of completion of the search | Examiner |
|---|---|---|
| Munich | 2 April 2026 | Koessler, Jean-Luc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................
& : member of the same patent family, corresponding
    document

## ANNEX TO THE EUROPEAN SEARCH REPORT
## ON EUROPEAN PATENT APPLICATION NO.

EP 25 20 8738

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | | Publication date | Patent family member(s) | | Publication date |
|---|---|---|---|---|---|
| JP 2022006660 | A | 13-01-2022 | NONE | | |
| EP 3605664 | B1 | 10-05-2023 | BR | 102019015348 A2 | 18-02-2020 |
| | | | CN | 110797567 A | 14-02-2020 |
| | | | EP | 3605664 A1 | 05-02-2020 |
| | | | JP | 7251069 B2 | 04-04-2023 |
| | | | JP | 2020021674 A | 06-02-2020 |
| | | | KR | 20200015384 A | 12-02-2020 |
| | | | RU | 2713231 C1 | 04-02-2020 |
| | | | US | 2020044284 A1 | 06-02-2020 |
| WO 2022239304 | A1 | 17-11-2022 | JP | 7616715 B2 | 17-01-2025 |
| | | | JP | WO2022239467 A1 | 17-11-2022 |
| | | | WO | 2022239304 A1 | 17-11-2022 |
| | | | WO | 2022239467 A1 | 17-11-2022 |

EPO FORM P0459

For more details about this annex : see Official Journal of the European Patent Office, No. 12/82

**EP 4 760 802 A1**

**Patent documents cited in the description**

• JP 2023167083 A